# FASCICULE DE BREVET EUROPEEN

(11) **EP 0 716 950 B1**
(45) Date de publication et mention de la délivrance du brevet: **01.04.1998**
(21) Numéro de dépôt: 95402495.6
(22) Date de dépôt: 07.11.1995
(51) Int. Cl.: B60N 2/00, F16B 21/16

(54) **Fixation amovible du piètement d'un siège de véhicule sur un plancher**
Abnehmbare Befestigung eines Fahrzeugsitzuntergestells auf einem Boden
Detachable fastening for a support of a vehicle seat on a floor

(30) Priorité: 15.12.1994 FR 9415133
(43) Date de publication de la demande: 19.06.1996
(73) Titulaire: CESA COMPAGNIE EUROPEENNE DE SIEGES POUR AUTOMOBILES, 92307 Levallois-Perret Cédex (FR)
(72) Inventeur: Harry, Sylvain, F-45260 Noyers (FR)
(74) Mandataire: Polus, Camille

(56) Documents cités:
- EP-A- 0 605 270
- CA-A- 1 181 112
- FR-A- 2 689 739
- FR-A- 2 705 289
- GB-A- 2 272 251
- US-A- 4 114 947
- US-A- 4 512 597
- US-A- 4 850 774

## Description

La présente invention concerne les dispositifs de fixation ou d'ancrage pour maintenir de manière amovible et sûre, un objet sur une surface, tel que par exemple un siège de véhicule terrestre sur le plancher ou sol de celui-ci.

Dans de nombreux secteurs techniques il est nécessaire de réunir ensemble deux objets ou parties d'objet afin de les maintenir assemblés d'une manière sans faille.

Tel est le cas par exemple dans le domaine aéronautique pour des conteneurs largables. Le document CA-A-1 181 112 décrit un dispositif de fixation à broche à bille expansible à ouverture retardée programmée.

Tel est le cas aussi par exemple dans le domaine automobile pour les véhicules terrestres dits "monospace" ou "un volume" ou "monocorps", qui tiennent à la fois de la conduite intérieure dit "break" et du véhicule utilitaire dit "fourgonnette". Etant donné l'universalité d'utilisation visée pour ces véhicules, il est nécessaire de les équiper de sièges dont certains au moins sont amovibles et sont aptes à prendre des positions multiples et variées, de préférence prédéterminées, c'est-à-dire aptes à prendre un certain nombre de positions discrètes et bien définies chacune.

Les sièges de ce type doivent, par exemple, pour être aptes à être occupés, pouvoir se déployer complètement en couchette, en fauteuil détente ou relax, en siège normal dit de conduite ou de route, ou se déployer partiellement en tablettes. Ils doivent aussi pouvoir se rétracter pour se rabattre partiellement ou se replier totalement d'une manière compacte et relativement peu encombrante en vue de leur escamotage dans le véhicule ou de leur enlèvement de ce dernier; ils sont alors inaptes à être occupés. Les documents FR-A-2 689 739 et FR-A-2 705 289 décrivent des sièges de ce type.

Pour de tels sièges il faut donc disposer d'un dispositif d'ancrage et de verrouillage au plancher du véhicule d'un maniement aisé qui soit tel qu'un siège mis en place sur le plancher ne puisse être effectivement occupé que lorsque le dispositif est non seulement ancré et verrouillé mais aussi réellement condamné de manière à le rendre indéfectible.

En effet, pour des raisons de sécurité, notamment en cas de chocs violents à grande composante longitudinale, repérée par rapport au véhicule, il ne faut pas que le siège se dérobe sous son occupant ou même soit entraîné par ce dernier dans le cas où la ceinture de sécurité qui équipe le siège n'est plus directement ancrée en deux ou trois points de la structure ou coque du véhicule, mais au contraire cette ceinture fait corps avec le siège et est en quelque sorte "embarquée" sur celui-ci, les différents points d'ancrage de la ceinture de sécurité étant établis directement sur le siège lui-même. On comprend que les efforts à absorber et/ou à transmettre en cas de choc se trouvent essentiellement localisés notamment dans la zone du piètement du siège et du plancher du véhicule ainsi qu'à leur jonction.

On saisit donc toutes les difficultés qu'il y a à satisfaire à toutes ces prescriptions, souvent contradictoires, en particulier lorsqu'on se souvient qu'un tel dispositif doit être produit en grande série et au moindre coût, et cela d'une manière particulièrement fiable.

Une solution dans ce sens a déjà été proposée dans EP-A-0 605 270, appartenant à la Demanderesse et concernant un verrou à enclenchement automatique à broche à bille expansible escamotable dans laquelle le tronc de cône constituant le bout intérieur de l'aiguille du verrou comprend deux plages successives d'angle propre différent pour assurer la compensation du jeu entre gâche et pêne.

L'invention a pour but de réaliser un dispositif de fixation du type à broche à bille expansible escamotable qui convient dans tous les cas où il est nécessaire de verrouiller et de déverrouiller rapidement deux parties l'une par rapport à l'autre dans des conditions de sécurité optimum.

Le dispositif selon l'invention, qui convient notamment à l'immobilisation d'un siège de véhicule sur le plancher de ce dernier présente les particularités :
- d'une rapidité de verrouillage et de déverrouillage;
- d'encliquetage et de déverrouillage manuels par action sur une commande,
- du signalement à l'aide de témoins de sûreté d'un mauvais encliquetage et/ou ancrage au plancher interdisant l'usage du siège,
- ainsi que de la protection de ses constituants essentiels notamment contre les chocs et les souillures.

L'invention a pour objet un dispositif (tel que décrit dans la première revendication indépendante) pour la fixation amovible, sur un plancher, du piètement d'un siège à configuration multiple avec une position déployée où il est apte à être occupé et avec une position rétractée où il est inapte à être occupé et où l'on passe de l'une à l'autre de ces positions par basculement selon une direction donnée. Ce dispositif est constitué notamment, d'une part, d'une gâche qui est associée au plancher et qui présente deux faces opposées d'appui et de verrouillage transpercées d'une ouverture avec un passage libre bordé d'une zone de contact sur la face de verrouillage et, d'autre part, d'un coffre qui porte un pêne fait d'un corps de verrouillage longiligne creux avec une cavité cylindrique de guidage dont l'axe est orthogonal à cette direction donnée et avec un embout, et avec au moins un canal transperçant le corps pour déboucher dans la cavité et avec une extrémité ouverte, et d'au moins une bille logée dans le canal pour y être retenue mobile entre une première position pour saillir partiellement à l'extérieur du corps afin de pouvoir rencontrer la zone de contact pour verrouiller le pêne sur la gâche quand son embout est engagé dans le passage et une seconde position escamotée dans le corps afin de se séparer de la zone de contact de manière à déverrouiller le pêne de la gâche, d'une aiguille logée mobile dans la cavité entre une position active où elle fait saillir la bille et une position inactive où elle permet à la bille de s'escamoter, avec un fût cylindrique, avec un bout intérieur constitué d'un tronc de cône convergent vers un pilote pour faire passer la bille de l'une à l'autre de ses positions et avec un bout extérieur, ainsi que d'une commande portée par le coffre et reliée par une liaison à ce bout extérieur pour mouvoir l'aiguille dans le corps. Un dispositif connu de ce genre est caractérisé, selon l'invention, en ce que la commande comprend un levier qui présente une poignée de manoeuvre et une articulation associée au coffre pour lui permettre de tourner selon un axe parallèle à la direction donnée entre une position de déverrouillage et une position de verrouillage et qui porte la liaison afin de pouvoir mouvoir l'aiguille entre ses deux positions, et en ce qu'il comprend une sûreté accouplée au levier et destinée à coopérer avec le piètement pour empêcher le basculement du siège en position déployée tant que le pêne n'est pas verrouillé sur la gâche.

L'invention a aussi pour objet l'application d'un dispositif du type indiqué auparavant à un siège de véhicule automobile terrestre pour son montage amovible sur le plancher de ce dernier.

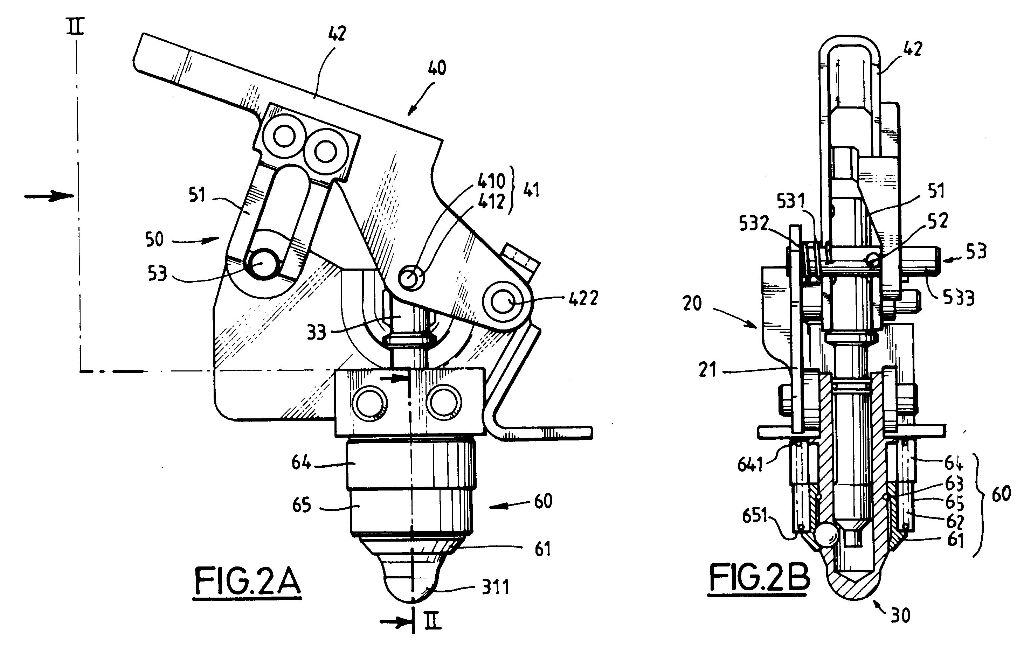

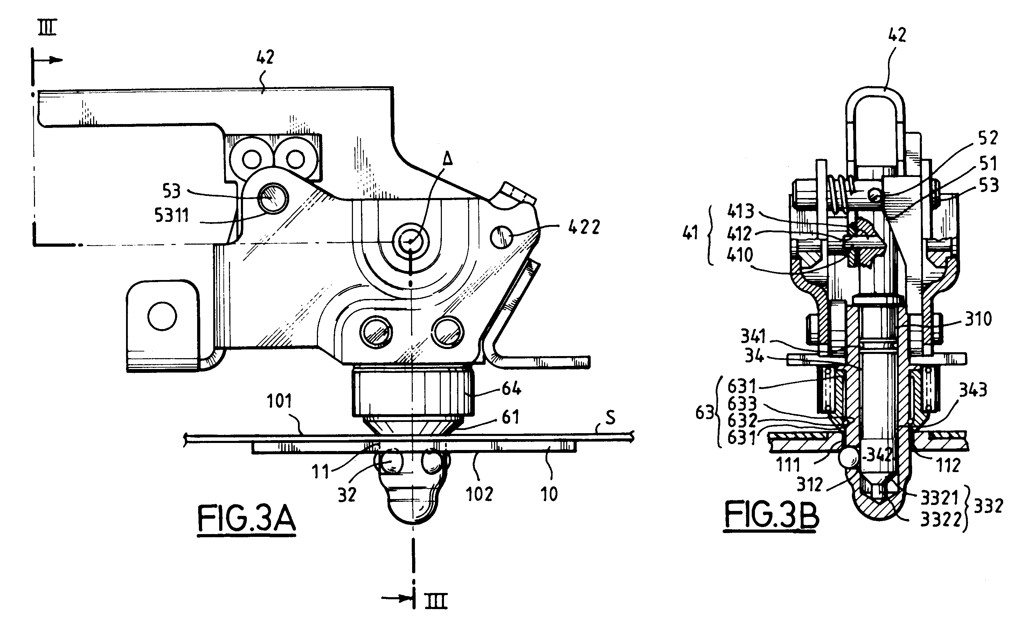

D'autres caractéristiques de l'invention ressortiront de la lecture de la description et des revendications qui suivent ainsi que de l'examen du dessin annexé, donné seulement à titre d'exemple, où :

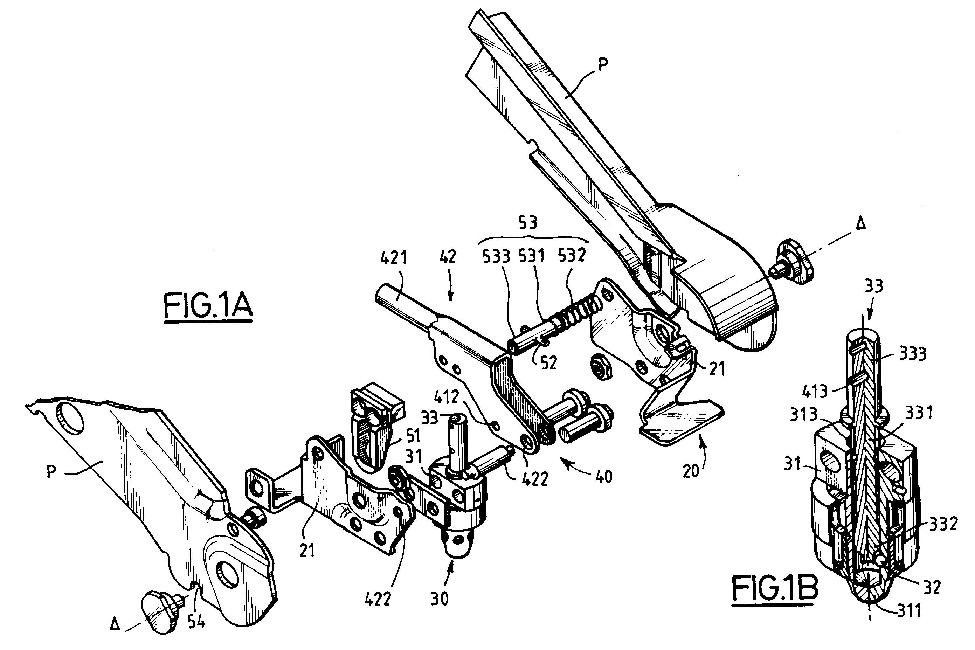

- sur la figure 1 la vue A est une représentation perspective schématique éclatée d'un mode de réalisation de l'invention dans son application à un siège de véhicule automobile terrestre, et la vue B est une représentation perspective schématique avec coupes locales d'une partie assemblée de ce mode de réalisation.
- les vues A et B de la figure 2 sont respectivement des vues en élévation et de face partiellement en coupe selon la ligne II-II, du dispositif selon l'invention de la figure 1, en position déverrouillée avant ancrage;
- les vues A et B de la figure 3 sont des vues analogues à celles de la Fig.2 où le dispositif selon l'invention est en position verrouillée ancrage fait, et

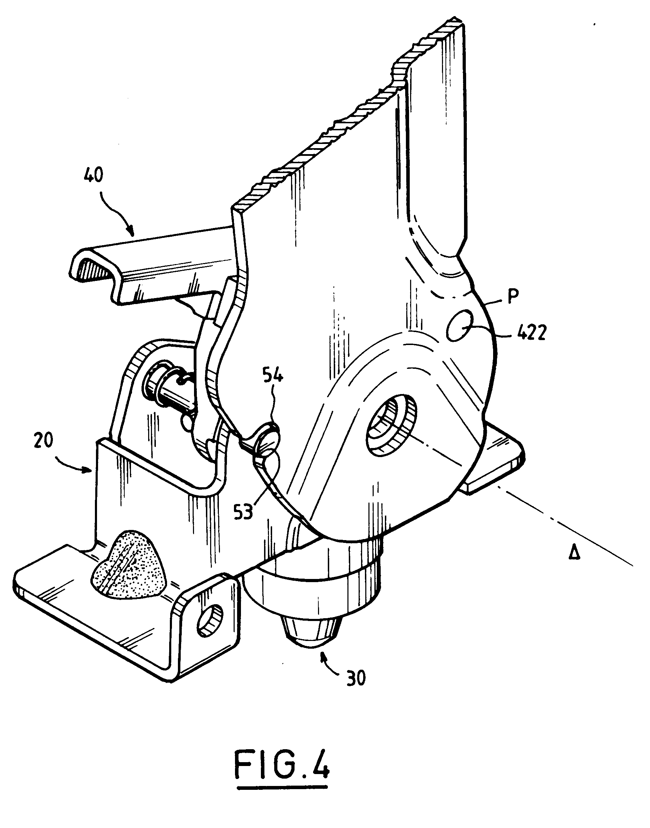

- la figure 4 est une vue perspective partielle illustrant le dispositif selon l'invention dans une position qui correspond à celle où il est représenté sur les vues de la Fig.2.

Les dispositifs de fixation amovible à broche à bille expansible escamotable, ainsi que les sièges de véhicule automobile terrestre étant bien connus dans la technique, on ne décrira dans ce qui suit que ce qui concerne directement ou indirectement l'invention. Pour le surplus l'Homme du Métier du domaine technique considéré puisera dans les solutions classiques courantes à sa disposition pour faire face aux problèmes particuliers auxquels il est confronté. En particulier il pourra utilement se reporter aux documents cités auparavant de la technique antérieure.

Dans ce qui suit on utilise toujours un même numéro de référence pour identifier un élément homologue quel que soit le mode de réalisation ou sa variante d'exécution.

Pour la commodité de l'exposé on décrira successivement chacun des constituants d'un dispositif selon l'invention dans son application particulière à un siège de véhicule automobile terrestre, avant d'en exposer la fabrication au besoin, et le fonctionnement.

Dans ce qui suit, le dispositif selon l'invention est décrit à propos de son application spécifique à un siège de véhicule automobile terrestre notamment à configuration multiple avec une position déployée où il est apte à être occupé et avec une position rétractée où il est inapte à être occupé, et où l'on passe de l'une à l'autre de ces deux positions par basculement selon une direction donnée. Il est clair que l'invention n'est pas limitée à cette application particulière.

Un tel siège comprend un piètement P avec au moins un pied destiné à reposer directement ou non sur un sol S ou plancher sur lequel il doit être fixé d'une manière amovible. Un tel siège repose habituellement sur le plancher à l'aide d'un piètement muni d'une jonction articulée qui permet un basculement selon une direction donnée △, le plus souvent transversale à l'axe longitudinal traditionnel d'un véhicule. Une telle jonction articulée est obtenue de toute manière classique par exemple à l'aide de pivots et paliers ou similaires.

Comme on le voit, un dispositif à broche à bille expansible escamotable selon l'invention comprend, essentiellement, une gâche 10, un coffre 20, un pêne 30, une commande 40, une sûreté 50 et, de préférence, un protecteur 60.

La gâche 10, faite par exemple d'une plaquette en tôle métallique appropriée, est destinée à être fixée sur le plancher P d'un véhicule notamment entre deux cloisons de ce dernier. La gâche 10 comprend deux faces opposées, une face 101 d'appui et une face 102 de verrouillage. La gâche 10 est transpercée de part en part, de l'une des faces à l'autre, d'une ouverture 11 avec un passage 111 libre et une zone de contact 112 par exemple en retrait pour les raisons que l'on comprendra par la suite. Cette zone de contact 112 se présente par exemple à la manière d'une dépression ou d'un chanfrein annulaire ou similaire.

Le coffre 20, qui est par exemple destiné à être associé au et à coopérer avec le piètement P pour définir l'axe de basculement △ à l'aide de la jonction articulée, porte le reste du dispositif selon l'invention. Le coffre 20 est constitué par exemple de deux flasques 21 latéraux pratiquement symétriques par rapport à un plan perpendiculaire à la direction △.

Le pêne 30 comprend, essentiellement, un corps 31, au moins une bille 32, une aiguille 33 et des moyens de guidage 34 de l'aiguille dans le corps.

Le corps 31 est longiligne et creux, et présente une cavité 310 de guidage par exemple cylindrique, un embout 311 de préférence fermé, et une extrémité 313 ouverte. Le corps 31 est pourvu d'au moins un canal 312 le transperçant pour déboucher dans la cavité 310. De préférence on utilise au moins trois canaux identiques équidistants.

Au moins une bille 32 est logée dans chaque canal pour y être retenue mobile entre une première position pour saillir partiellement à l'extérieur du corps afin de pouvoir rencontrer la zone de contact 112 de manière à verrouiller le pêne 30 sur la gâche 10, et une seconde position escamotée dans le corps afin de se séparer de la zone de contact 112 de manière à déverrouiller le pêne 30 de la gâche 10. Les billes sont retenues dans les canaux par exemple par sertissage ou une technique similaire.

L'aiguille 33 est logée mobile en translation dans la cavité 310 entre une position active dans laquelle elle est apte à faire saillir les billes dans leur première position et à les maintenir dans cette position, et une position inactive pour laquelle les billes peuvent prendre leur seconde position escamotée. L'aiguille 33 comprend un fût 331 par exemple cylindrique, un bout 332 intérieur constitué d'un tronc de cône 3321 convergent vers un pilote 3322 et aussi un bout 333 extérieur dont le rôle apparaîtra par la suite.

Les moyens de guidage 34, de tout type approprié, qui permettent un coulissement aisé et pratiquement sans jeu de l'aiguille dans la cavité du corps, comprennent par exemple des épaulements 342 sur le fût de l'aiguille, qui coopèrent chacun avec des portées 343 correspondantes de la cavité. De préférence un joint 341, par exemple torique, assure l'étanchéité.

La commande 40 est portée par le coffre 20 et est reliée par une liaison 41 au bout extérieur 333 de l'aiguille 33 pour mouvoir à volonté l'aiguille 33 dans le corps 31.

La commande 40 se présente à la manière d'un levier 42 qui est équipé d'une poignée 421 de manoeuvre et d'une articulation 422 associée au coffre 20 pour lui permettre de tourner en décrivant un arc de cercle centré sur un axe parallèle à la direction donnée △, entre une position de déverrouillage et une position de verrouillage, et qui porte la liaison 41 afin de pouvoir mouvoir l'aiguille 33 entre ses deux positions correspondantes.

La liaison 41 est, de préférence, assurée avec jeu. La liaison 41 comprend par exemple une cheville 410 portée par le bout extérieur 333 de l'aiguille 33 dans laquelle elle est engagée au travers d'un trou 413 transversal, et au moins une lumière 412 ménagée dans le levier de manière à pouvoir s'y déplacer par exemple avec jeu. Le jeu est ménagé indifféremment dans le levier ou l'aiguille ou dans les deux, pour des raisons de cinématique puisque l'aiguille se déplace selon une translation et le levier se déplace selon un arc de cercle.

L'articulation 422 du levier 42 sur les flasques 21 du coffre 20 qui lui permet de se déplacer selon un axe parallèle à la direction △ donnée, est obtenue de toute manière classique appropriée par exemple à l'aide de pivots et de paliers.

La sûreté 50 est accouplée au levier 42 et coopère avec le piètement P pour empêcher le basculement du siège en position déployée tant que le pêne n'est pas verrouillé sur la gâche. La sûreté 50 comprend, essentiellement, une came 51 portée par le levier 42, une contre-came 52 coopérant avec la came 51 et montée mobile sur le coffre 20 de manière à pouvoir se déplacer parallèlement à la direction donnée △, un arrêtoir 53 mobile associé à la contre-came 52 dont il est solidaire des déplacements afin de se déplacer entre une position en retrait inopérante et une position en saillie opérante, ainsi qu'une butée 54 portée par le piètement et apte à rencontrer l'arrêtoir en position en saillie opérante.

La came 51 se présente à la manière d'une rampe, simple ou multiple, dont la surface active est dirigée selon la direction donnée △. La contre-came 52 se présente par exemple à la manière d'une tige qui est montée transversalement orthogonalement à la direction donnée △, comme on le comprendra par la suite. L'arrêtoir 53 comprend un doigt 531 monté coulissant parallèlement à la direction donnée △ dans le coffre 20 par exemple à l'aide de logements 5311 ménagés dans chacun des flasques 21 du coffre 20, une sollicitation élastique 532 telle que par exemple un ressort à boudin à spires hélicoïdales travaillant à la compression et agissant sur le doigt 531 pour maintenir au contact came 51 et contre-came 52 et pour tendre à placer l'arrêtoir 53 en position en saillie opérante, ainsi qu'un prolongement 533 apte à se placer sur la trajectoire décrite par la butée 54 lorsque le piètement P passe de l'une à l'autre de ses deux positions, pour l'entraver et empêcher le basculement en position déployée quand le pêne n'est pas verrouillé sur la gâche.

Le protecteur 60 comprend, essentiellement, une douille 61 montée coulissante sur l'extérieur du corps 31 du pêne 30, un ressort 62, un limiteur de course 63 définissant l'amplitude du débattement de la douille 61 relativement au corps 31. Ce limiteur de course 63 est fait par exemple d'épaulements 631 à l'intérieur de la douille 61 et d'un jonc élastique 632 tel un "CIRCLIPS" engagé dans une gorge 633 périphérique du corps 31 du pêne 30. Le protecteur comprend aussi un cache-ressort 64 avec un rebord 641 et un capot 65 avec un rebord 651. Le ressort 62 prend appui contre chacun des rebords du cache-ressort et du capot qui sont aptes à coulisser l'un dans l'autre, de manière à repousser la douille dans une position dans laquelle elle recouvre normalement les canaux et empêche ainsi les billes d'occuper leur première position en saillie.

Tous les constituants d'un dispositif selon l'invention sont faits à l'aide de matériaux classiques, de préférence métalliques, qui sont mis en forme et travaillés selon des techniques traditionnelles.

Tous les constituants d'un dispositif selon l'invention sont réunis, montés et assemblés comme cela ressort clairement de l'examen des figures du dessin.

On décrira maintenant le fonctionnement de ce mode de réalisation du dispositif selon l'invention.

On supposera qu'initialement le siège occupe une position rétractée où il est inapte à être occupé, et est séparé du plancher. Cette situation est celle qui est illustrée sur les vues de la figure 2 et de la figure 4. Dans une telle situation le dispositif est en position déverrouillée. On voit alors que le protecteur empêche les billes de saillir et que dans cette condition l'aiguille est en position inactive et ne peut pas en changer puisque les billes reposent contre le pilote et le cône de l'aiguille et immobilisent ainsi cette dernière et le levier de commande qui lui est associé par la liaison. Dans une telle situation la sûreté empêche le basculement du siège en position déployée. En effet le prolongement du doigt de l'arrêtoir est en position en saillie opérante et se trouve placé sur la trajectoire décrite par la butée du piètement puisque la contre-came est appliquée contre la partie basse de la rampe de la came.

Si maintenant on souhaite ancrer le piètement du siège au plancher, il suffit d'engager l'embout du corps du pêne dans le passage de l'ouverture de la gâche. En faisant ceci, la douille du protecteur rencontre la face d'appui de la gâche et cette face d'appui repousse la douille à l'encontre de la sollicitation élastique de son ressort. De la sorte la douille démasque les canaux qui se trouvent maintenant en regard de la zone de contact de la face de verrouillage de la gâche. Rien n'empêche plus maintenant de placer les billes dans leur première position en saillie partiellement à l'extérieur du corps. Pour faire saillir les billes il suffit d'agir sur la poignée du levier de la commande pour que celle-ci entraîne l'aiguille dont le tronc de cône de son bout intérieur et chasse les billes de leur position escamotée à leur position saillante. En faisant ceci on verrouille le pêne sur la gâche. Au cours de cette opération la came, entraînée par le levier au cours de son pivotement, repousse la contre-came à l'encontre de la sollicitation élastique. Ceci a pour effet de placer le prolongement de l'arrêtoir dans sa position en retrait inopérante, où il cesse d'intercepter la trajectoire décrite par la butée du piètement. Plus rien n'empêche alors de faire basculer le siège dans sa position déployée où il est apte à être occupé. Le dispositif occupe maintenant la position où il est illustré sur les vues de la figure 3.

Si l'on souhaite maintenant replacer le siège en position rétractée pour gagner de la place ou le retirer du véhicule, il suffit par exemple de commencer par le basculer puis, ensuite, d'agir sur la poignée du levier de la commande pour la faire passer de la position où elle est illustrée sur les vues de la figure 3 à celle où elle est illustrée sur les vues des figures 2 et 4.

Ce qui précède met bien en lumière les particularités distinctives de l'invention l'intérêt qu'elle offre et les avantages qu'elle procure.

## Revendications

1. Dispositif pour la fixation amovible sur un plancher (S), du piètement (P) d'un siège à configuration multiple avec une position déployée où il est apte à être occupé et une position rétractée où il est inapte à être occupé et où l'on passe de l'une à l'autre de ces deux positions par basculement selon une direction (△) donnée, ce dispositif étant constitué notamment, d'une part, d'une gâche (10) qui est associée au plancher (S) et qui présente deux faces (101, 102) d'appui et de verrouillage opposées transpercées d'une ouverture (11) avec un passage (111) libre bordé d'une zone (112) de contact sur la face de verrouillage (102) et, d'autre part, d'un coffre (20) qui porte un pêne (30) fait d'un corps (31) de verrouillage longiligne creux avec une cavité (310) cylindrique de guidage dont l'axe est orthogonal à cette direction (△) et avec un embout (311), et avec au moins un canal (312) transperçant ce corps (31) pour déboucher dans la cavité (310) et avec une extrémité (313) ouverte, d'au moins une bille (32) logée dans le canal (312) pour y être retenue mobile entre une première position pour saillir partiellement à l'extérieur du corps (31) afin de pouvoir rencontrer la zone de contact (112) pour verrouiller le pêne (30) sur la gâche (10) quand son embout (311) est engagé dans le passage (111) et une seconde position escamotée dans le corps (31) afin de se séparer de la zone de contact (112) de manière à déverrouiller le pêne (30) de la gâche (10), d'une aiguille (33) logée mobile dans la cavité (310) entre une position active où elle fait saillir la bille (32) et une position inactive où elle permet à la bille (32) de s'escamoter et avec un fût (331) cylindrique, avec un bout (332) intérieur constitué d'un tronc de cône (3321) convergent vers un pilote (3322) pour faire passer la bille (32) de l'une à l'autre de ses positions et avec un bout (333) extérieur, ainsi que d'une commande (40) portée par le coffre (20) et reliée par une liaison (41) à ce bout extérieur (333) pour mouvoir l'aiguille (33) dans le corps (31), et étant caractérisé en ce que la commande (40) comprend un levier (42) qui présente une poignée (421) de manoeuvre et une articulation (422) associée au coffre (20) pour lui permettre de tourner selon un axe parallèle à la direction donnée (△) entre une position de déverrouillage et une position de verrouillage et qui porte la liaison (41) afin de pouvoir mouvoir l'aiguille (33) entre ses deux positions, et en ce qu'il comprend une sûreté (50) accouplée au levier (42) et destinée à coopérer avec le piètement (P) pour empêcher le basculement du siège en position déployée tant que le pêne (30) n'est pas verrouillé sur la gâche (10).

2. Dispositif selon la revendication 1, caractérisé en ce que la sûreté (50) comprend une came (51) portée par le levier (42), une contre-came (52) coopérant avec la came (51) et montée mobile sur le coffre (20) de manière à pouvoir se déplacer parallèlement à la direction donnée (△), un arrêtoir (53) mobile associé à la contre-came (52) dont il est solidaire des déplacements afin de se déplacer entre une position en retrait inopérante et une position en saillie opérante et une butée (54) portée par le piètement (P) et apte à rencontrer l'arrêtoir (53) en position en saillie opérante.

3. Dispositif selon la revendication 2, caractérisé en ce que la came (51) est une rampe et la contre-came (52) est une tige.

4. Dispositif selon la revendication 2 ou 3, caractérisé en ce que l'arrêtoir (53) comprend un doigt (531) monté coulissant parallèlement à la direction donnée (△) dans le coffre (20), une sollicitation élastique (532) agissant sur le doigt (531) pour maintenir en contact came (51) et contre-came (52) et un prolongement (533) apte à se placer sur la trajectoire de la butée (54) lorsque le piètement (P) passe de l'une à l'autre de ses deux positions pour l'entraver et empêcher le basculement en position déployée quand le pêne (30) n'est pas verrouillé sur la gâche (10).

5. Dispositif selon les revendications 3 et 4, caractérisé en ce que la contre-came (52) en tige est montée transversalement sur le doigt (531) orthogonalement à la direction donnée (△).

6. Dispositif selon l'une quelconque des revendications 1 à 5, caractérisé en ce que la liaison (41) est assurée avec jeu.

7. Dispositif selon l'une quelconque des revendications 1 à 6, caractérisé en ce que la liaison (41) comprend une cheville (410) portée par le bout extérieur (333) de l'aiguille (33) et engagée dans le levier (42).

8. Dispositif selon l'une quelconque des revendications 1 à 7, caractérisé en ce qu'il comprend un protecteur (60) normalement sollicité élastiquement dans une position où il occulte au moins un canal (312) du corps (31) du pêne (30) pour empêcher au moins une bille (32) de saillir dans sa première position et interdire à l'aiguille (33) de prendre sa position active.

9. Dispositif selon la revendication 8, caractérisé en ce que le protecteur (60) comprend une douille (61) montée coulissante à l'extérieur du corps (31), un ressort (62) sollicitant la douille (61) et un limiteur de course (63).

10. Dispositif selon la revendication 9, caractérisé en ce que le protecteur (60) comprend un cache-ressort (64) et un capot (65) entre lesquels le ressort (62) est engagé.

11. Application d'un dispositif selon l'une quelconque des revendications 1 à 10 à un siège de véhicule automobile terrestre pour son montage amovible sur son plancher.

## Claims

1. Device for releasably securing to a floor (S) the base (P) of a multiple-configuration seat having a deployed position in which it is suitable for occupation and a retracted position in which it is unsuitable for occupation, and where alternation between these two positions is effected by tilting in a given direction (△), this device notably comprising, firstly, a catch (10) which is associated with the floor (S) and which has two opposing support and locking faces (101, 102) containing an opening (11) having a free passage (111) bordered by a contact zone (112) on the locking face (102), and, secondly, a casing (20) which carries a bolt (30) which is formed by a hollow, elongate locking body (31) having a cylindrical guide cavity (310), whose axis is perpendicular to the direction (△), a tip (311), at least one channel (312) passing through the body (31) and leading into the cavity (310), and having an open end (313), by at least one ball (32) accommodated in the channel (312) in order to be retained there so that it is movable between a first position projecting partially outside the body (31) in order to be able to abut the contact zone (112) to lock the bolt (30) against the catch (10) when the bolt's tip (311) is engaged in the passage (111), and a second position retracted inside the body (31) in order to disengage from the contact zone (112) to unlock the bolt (30) from the catch (10), by a pin (33) accommodated and movable in the cavity (310) between an active position where it causes the ball (32) to project and an inactive position where it allows the ball (32) to be retracted and having a cylindrical shaft (331), having an internal end member (332) comprising a truncated cone (3321) tapering towards a guide member (3322) in order to switch the ball (32) from one of its positions to the other, and an external end member (333), and also by a control device (40) carried by the casing (20) and connected by means of a link (41) to the external end member (333) in order to move the pin (33) in the body (31), and being characterised in that the control device (40) comprises a lever (42) which has an operating handle (421) and an articulation (422) associated with the casing (20) to enable the casing to pivot about an axis parallel to the given direction (△) between an unlocking position and a locking position, and which carries the link (41) in order to be able to move the pin (33) between its two positions, and in that it comprises a safety device (50) attached to the lever (42) and designed to co-operate with the base (P) to prevent the seat from tilting when prevent the seat from tilting when in the deployed position if the bolt (30) is not locked against the catch (10).

2. Device according to Claim 1, characterised in that the safety device (50) comprises a cam (51) carried by the lever (42), a cam follower (52) co-operating with the cam (51) and movably mounted on the casing (20) so that it can move parallel to the given direction (△), a movable stop (53) associated with the cam follower (52) with which it is integral in movement in order to travel between a non-operative retracted position and an operative projecting position, and an abutment (54) carried by the base (P) and capable of coming into contact with the stop (53) in the operative projecting position.

3. Device according to Claim 2, characterised in that the cam (51) is a ramp and the cam follower (52) is a rod.

4. Device according to Claim 2 or 3, characterised in that the stop (53) comprises a finger (531) mounted to slide parallel to the given direction (△) in the casing (20), a resilient stress device (532) acting upon the finger (531) to maintain contact between the cam (51) and the cam follower (52), and an extension piece (533) capable of placing itself on the path of the abutment (54) when the base (P) switches from one of its two positions to the other in order to obstruct it and prevent tilting in the deployed position when the bolt (30) is not locked against the catch (10).

5. Device according to Claims 3 and 4, characterised in that the cam follower (52) in the form of a rod is mounted transversely on the finger (531) perpendicularly to the given direction (△).

6. Device according to any one of Claims 1 to 5, characterised in that the link (41) is retained with play.

7. Device according to any one of Claims 1 to 6, characterised in that the link (41) comprises a peg (410) carried by the external end member (333) of the pin (33) and engaged in the lever (42).

8. Device according to any one of Claims 1 to 7, characterised in that it comprises a guard (60) normally urged resiliently into a position where it blocks at least one channel (312) of the body (31) of the bolt (30) to prevent at least one ball (32) from projecting in its first position and preventing the pin (33) from occupying its active position.

9. Device according to claim 8, characterised in that the guard (60) comprises a sleeve (61) slidably mounted on the outside of the body (31), a spring (62), placing the sleeve (61) under stress, and a travel limiting member (63).

10. Device according to Claim 9, characterised in that the guard (60) comprises a spring cover (64) and a cap (65) between which the spring (62) is engaged.

11. Application of a device according to any one of Claims 1 to 10 to a seat of a land motor vehicle in order to mount the seat releasably on its floor.

## Patentansprüche

1. Vorrichtung für die demontierbare Befestigung auf dem Boden (S) des Fußgestells (P) eines Sitzes mit multipler Konfiguration mit einer aufgeklappten Stellung, in der er von einem Fahrgast besetzt werden kann, und einer eingeklappten Stellung, in der er nicht von einem Fahrgast besetzt werden kann, und bei der man von der einen dieser Stellungen in die andere dieser Stellungen durch Kippen des Sitzes in einer vorgegebenen Richtung (△) wechseln kann, wobei diese Vorrichtung einerseits insbesondere auf einem mit dem Boden (S) verbundenen Schließhaken (10) besteht, welcher zwei gegenüberliegende Auflage- und Verriegelungsflächen (101, 102) aufweist, die von einer Öffnung (11) mit einem freien Durchgang (111) durchquert werden, welche von einem Kontaktbereich (112) an der Verriegelungsfläche (102) umrandet wird, und andererseits aus einem Kasten (20) besteht, welcher einen Riegel (30) trägt, der aus einem längsförmigen hohlen Verriegelungskörper (31) mit einer zylindrischen Führungsnut (310) besteht, deren Achse rechtwinklig zu dieser Richtung (△) verläuft, sowie mit einem Ansatzstück (311) und mit mindestens einen Kanal (312), welcher den Körper (31) durchquert und in die Nut (310) mündet, sowie mit einem offenen Endabschnitt (313), mindestens einer in dem Kanal (312) gelagerten Kugel (32), in dem sie beweglich so gehalten wird, daß sie zwischen einer ersten Stellung teilweise aus der Außenseite des Körpers (31) hervorsteht und mit dem Kontaktbereich (112) in Berührung tritt, um den Riegel (30) mit dem Schließhaken (10) zu verriegeln, wenn sein Ansatzstück (311) in dem Durchgang (111) sitzt, sowie einer zweiten Stellung, in der sie in dem Körper (31) versenkt ist, um sich von dem Kontaktbereich (112) so zu lösen, daß der Riegel (30) von dem Schließhaken (10) gelöst wird, und mit einer Nadel (33), welche beweglich in der Nut (310) zwischen einer aktiven Stellung gelagert ist, in der sie die Kugel (32) herausdrückt, und einer inaktiven Stellung, in der es möglich ist, die Kugel (32) zu versenken, sowie mit einem zylindrischen Schaft (331), einem inneren Ansatzstück (332), welches aus einem Kegelstumpf (3321) besteht, welcher mit einem Fangstift (3322) konvergiert, um die Kugel (32) jeweils von ihrer ersten Stellung in ihre zweite Stellung zu verschieben, und mit einem äußeren Ansatzstück (333), sowie mit einer von dem Kasten (20) getragenen Betätigung (40), welche über ein Verbindungsstück (41) an dieses äußere Ansatzstück (333) angeschlossen ist, um die Nadel (33) in dem Körper (31) zu verschieben,
**dadurch gekennzeichnet, daß** die Betätigung (40) einen Hebel (42) mit einen Bedienungsgriff (421) aufweist, sowie ein mit dem Kasten (20) verbundenes Gelenk (422) enthält, welches es ihm erlaubt, sich um eine Achse zu drehen, die parallel zu der vorgegebenen Richtung (△) zwischen einer entriegelten Stellung und einer vorriegelten Stellung verläuft und den Anschluß (41) trägt, um die Nadel (33) zwischen diesen beiden Stellungen verschieben zu können, und dadurch, daß eine Sicherung (50) vorgesehen ist, welche an den Hebel (42) gekoppelt ist und dafür bestimmt ist, mit dem Fußgestell (P) zu kooperieren, um ein Kippen des Sitzes in die aufgeklappte Stellung zu vermeiden, solange der Riegel (30) nicht in den Schließhaken (10) eingerastet ist.

2. Vorrichtung nach Anspruch 1,
**dadurch gekennzeichnet, daß** die Sicherung (50) eine von dem Hebel (42) getragene Nocke (51) aufweist, sowie eine Führungsnocke (52), welche mit der Nocke (51) kooperiert und an dem Kasten (20) in beweglicher Weise so montiert ist, daß sie sich parallel zu der vorgegebenen Richtung (△) verschieben kann, und dadurch, daß eine bewegliche Arretierung (53) vorgesehen ist, welche mit der Führungsnocke (52) verbunden ist, deren Bewegungen sie folgt, um sich zwischen einer zurückgezogenen inoperativen Stellung und einer hervorstehenden operativen Stellung und einem von dem Fußgestell (P) getragenen Anschlag (54) zu verschieben und geeignet ist, in der hervorstehenden operativen Stellung mit der Arretierung (53) in Verbindung zu treten.

3. Vorrichtung Nach Anspruch 2,
**dadurch gekennzeichnet, daß** die Nocke (51) aus einer Rampe und die Führungsnocke (52) aus einem Stift besteht.

4. Vorrichtung nach einem der Ansprüche 2 oder 3,
**dadurch gekennzeichnet, daß** die Arretierung (53) einen Zapfen (531) aufweist, welcher gleitend parallel zu der vorgegebenen Richtung (△) in dem Kasten (20) angeordnet ist, sowie eine elastische Feder (532), welche auf den Zapfen (531) einwirkt, um die Nocke (51) und die Führungsnocke (52) in Verbindung zu halten, und daß ein Verlängerungsteil (533) vorgesehen ist, welcher sich auf der Laufbahn des Anschlagen (54) verschieben kann, wenn sich das Fußgestell (P) zwischen diesen beiden Stellungen verschiebt, um ein Kippen in die aufgeklappte Stellung zu verhindern, wenn der Riegel (30) nicht in den Schließhaken (10) eingerastet ist.

5. Vorrichtung nach einem der Ansprüche 3 und 4,
**dadurch gekennzeichnet, daß** die stiftförmige Führungsnocke (52) quer zu dem Zapfen (531) rechtwinklig zu der vorgegebenen Richtung (△) montiert ist.

6. Vorrichtung nach einem der Ansprüche 1 bis 5,
**dadurch gekennzeichnet, daß** die Verbindung (41) mit Spiel hergestellt wird.

7. Vorrichtung nach einem der Ansprüche 1 bis 6,
**dadurch gekennzeichnet, daß** die Verbindung (41) einen Führungsstift (410) aufweist, welcher von dem äußeren Ansatzstück (333) der Nadel (33) getragen wird und in den Hebel (42) eingreift.

8. Vorrichtung nach einem der Ansprüche 1 bis 7,
**dadurch gekennzeichnet, daß** sie eine Schutzvorrichtung (60) aufweist, welche normalerweise elastisch in eine Stellung gedrückt wird, in der die mindestens einen Kanal (312) des Körpers (31) des Riegels (30) abdeckt um mindestens eine Kugel (32) daran zu hindern, in ihrer ersten Stellung hervorzustehen und zu vermeiden, daß die Nadel (33) ihre aktive Stellung einnimmt.

9. Vorrichtung nach Anspruch 8,
**dadurch gekennzeichnet, daß** die Schutzvorrichtung eine Buchse (61) aufweist, welche gleitend an der Außenseite des Körpers (31) montiert ist, sowie eine Feder (62), welche die Buchse (61) beaufschlagt, und daß ein Hubbegrenzer (63) vorgesehen ist.

10. Vorrichtung nach Anspruch 9,
**dadurch gekennzeichnet, daß** die Schutzvorrichtung (60) eine Federabdeckung (64) und eine Abdeckhaube (65) aufweist, zwischen denen die Feder (62) gelagert ist.

11. Verwendung einer Vorrichtung nach einem der Ansprüche 1 bis 10 für einen Sitz eines Straßenfahrzeuges, der demontierbar auf dem Boden dieses Fahrzeugs befestigt ist.
